Europäisches Patentamt

European Patent Office

Office européen des brevets

(11) Publication number: **0 154 146**
**A1**

(12) # EUROPEAN PATENT APPLICATION

(21) Application number: **85100785.6**

(22) Date of filing: **25.01.85**

(51) Int. Cl.⁴: **G 01 N 27/28**

(30) Priority: **25.01.84 JP 12797/84**

(43) Date of publication of application:
**11.09.85 Bulletin_ 85/37**

(84) Designated Contracting States:
**DE GB**

(71) Applicant: **FUJI PHOTO FILM CO., LTD.**
**210 Nakanuma Minamiashigara-shi**
**Kanagawa-ken, 250-01(JP)**

(72) Inventor: **Saito, Yoshio**
**Fuji Photo Film Co., Ltd 3-11-46 Sensui**
**Asaka-shi Saitama-ken(JP)**

(72) Inventor: **Koizumi, Teruaki**
**Fuji Photo Film Co., Ltd 3-11-46 Sensui**
**Asaka-shi Saitama-ken(JP)**

(72) Inventor: **Seshimoto, Osamu**
**Fuji Photo Film Co., Ltd 3-11-46 Sensui**
**Asaka-shi Saitama-ken(JP)**

(74) Representative: **Kraus, Walter, Dr. et al,**
**Patentanwälte Kraus Weisert & Partner**
**Thomas-Wimmer-Ring 15**
**D-8000 München 22(DE)**

(54) Method and apparatus for measuring ionic activity.

(57) An improved method for measuring ionic activity is comprised of the steps of measuring the temperature in the vicinity of an ionic activity measuring device on which reference and sample solutions are spotted, and, with reference to the measured temperature, correcting potential difference corresponding to the ionic activity difference between the solutions or modifying a corresponding calibration curve so as to calculate the ionic activity of the sample solutions, without strictly controlling the temperature for measurement. Also an improved apparatus for conducting above-described method is disclosed.

EP 0 154 146 A1

## BACKGROUND OF THE INVENTION

### Field of the Invention

This invention relates to a method and an apparatus for measuring the ionic activity of electrolytes contained in such aqueous liquid samples as body fluids. More particularly, this invention relates to a novel potentiometric analysis method and a novel analyzer for use in said method.

### Description of the Prior Art

Measurement of ionic activity of an electrolyte ion, for example $Na^+$, $K^+$, $Cl^-$, $Ca^{2+}$, $HCO_3^-$ or $CO_3^{2-}$, contained in such body fluids as whole blood, blood plasma, blood serum, and urine, has significant importance in clinical chemistry tests. For this measurement, an ionic activity measuring apparatus, i.e. a so-called electrolyte analyzer, has been used. Such techniques as flame analysis, coulometry and potentiometry are known for use in said analyzer.

In potentiometric measurement of ionic activity, an ionic activity measuring device having ion-selective electrodes is used. As such a device, a dry type device having film-like ion-selective electrodes has been disclosed, for example, in U.S. Patent Nos. 4,053,381 and 4,437,970.

The basic structure of this ionic activity measuring device is that of a slide comprising at least one pair of solid state electrodes each of which has an ion-selective outermost layer and a porous bridge which can promote capillary action between two such ion-selective layers. The ionic activity of a specific ion contained in a sample solution can be determined by spotting a reference solution on one of the ion-selective layers and a sample solution on the other and then measuring the potential difference between the electrodes.

This calibration curve has been considered to be based on the following theoretical expression:

$$E = 2.303 \frac{RT}{nF} \log \frac{a_i \text{ test}}{a_i \text{ ref}}$$

wherein E is potential difference, R is gas constant, T is an absolute temperature, n is an ionic charge, F is a Faraday constant, $a_i$ test is ionic activity in a sample solution, and $a_i$ ref is ionic activity in a reference solution.

In view of this expression, the relationship between ionic activity and potential difference is regarded as depending on the temperature.

Accordingly, in the conventional analyzer, the ionic activity measuring device on which reference and sample solutions have been spotted in transferred into a thermostatic chamber which is maintained at a predetermined temperature (usually, though not necessarily, 25°C or 37°C) and from which said measuring device is further transferred to a measuring section where the measurement is conducted. Such an analyzer that requires a thermostatic means has drawbacks in that it takes much time before the predetermined thermostatic condition is achieved and that an error in the measurement is likely to occur when the temperature of the sample or reference solution deviates from the predetermined temperature.

0154146

## SUMMARY OF THE INVENTION

It is thus an object of the present invention to provide a method for potentiometrically measuring ionic activity, easily and accurately, regardless of temperature fluctuation.

It is another object of the present invention to provide an apparatus for measuring potentiometrically ionic activity by which ionic activity can be measured easily and accurately regardless of temperature fluctuation.

It is a further object of the present invention to provide an apparatus for measuring potentiometrically ionic activity which is small in size and by which the measurement can be achieved in a short time.

The method for measuring ionic activity in accordance with the present invention is characterized in that it comprises the steps of:

measuring the potential difference (difference in electro-motive force) between said pair of ion-selective electrodes on which reference and sample solutions are spotted;

measuring the temperature in the vicinity of an ionic activity measuring device having at least one pair of ion-selective electrodes on which reference and sample solutions are spotted; and

with reference to said temperature, either correcting potential difference obtained between said pair of ion-selective electrodes or modifying a calibration curve so as to calculate ionic activity of said sample solution.

- 4 -

The apparatus for measuring ionic activity in accordance with the present invention is characterized in that it comprises:

at least one pair of probes for measuring a potential difference which can electrically come into contact with at least one pair of ion-selective electrodes of an ionic activity measuring device, so as to measure the potential difference therebetween;

a temperature measuring means for measuring the temperature in the vicinity of said measuring device; and

a calculating means for calculating ionic activity of said sample solution by, with reference to said temperature, either correcting said potential difference between said pair of ion-selective electrodes or modifying a calibration curve.

In the present invention, "temperature in the vicinity of an ionic activity measuring device" refers not only to the temperature of an ionic activity measuring device itself or the temperature near said device, but also to a temperature substantially corresponding to the temperature of the ionic activity measuring device or the temperature of an area [e.g. a thermostatically air-conditioned chamber (incubator) or a large thermostatic apparatus] which has a certain relationship to the temperature of the ionic activity measuring device. It is preferable for the measurement of ionic activity that the temperature in the vicinity of the ionic activity measuring device corresponds to the temperature of reference and sample solutions (preferably, both of the solutions are of the same temperature) as near as possible to the time or substantially the same time for measuring the potential difference. However, if there is little temperature change, the temperature may be measured either before the spotting of said solutions or at a time substantially after the measurement of the potential difference.

By measuring the temperature in the vicinity of the ionic activity measuring device and then performing a correction thereof corresponding to said temperature, the ionic activity of the sample solution at the temperature near to the actual liquid temperature can be measured in accordance with the method of the present invention, enabling highly accurate measurement results to be achieved.

Since the apparatus in accordance with the present invention has temperature measuring means and calculating means for making corrections corresponding to said temperature, ionic activity can be accurately measured regardless of temperature fluctuation within the apparatus. Accordingly, the thermostatic means used in the conventional apparatus can be omitted in the apparatus in accordance with the present invention, enabling the apparatus and the measurement time to be minimized. If the ambient temperature is extremely high or low (e.g. in the open air or within a chamber without air-conditioning in the tropics, a mountainous area or a frigid place), the temperature in the vicinity of the ionic activity measuring device may be adjusted to that of a normal temperature area (i.e. a temperature where a correction thereto can be conducted accurately, or to a temperature area of an air-conditioned chamber) so as to conduct the correction within said temperature area, although it may not reach a thermostatically controlled temperature of the conventional apparatus. Further, when the apparatus in accordance with the present invention is provided with a thermostatic means, the measurement can be conducted with greatly improved accuracy compared to the conventional apparatus.

BRIEF DESCRIPTION OF THE DRAWINGS

Figure 1 is a perspective view of an example of a potentiometric ionic activity measuring device to which the apparatus in accordance with the present invention is applicable,

Figure 2 is a perspective view of another example of a potentiometric ionic activity measuring device,

Figure 3 is a schematic perspective view of an embodiment of the apparatus in accordance with the present invention,

Figure 4 is a schematic view of an example of a peristaltic pump which can be used in the spotting section of the apparatus in accordance with the present invention,

Figure 4A is a perspective view of an example of a probe assembly used in the apparatus of the present invention,

Figure 4B is a partially broken side view of said assembly,

- 7 -

Figure 5A is a partially enlarged view of the apparatus shown in Figure 3,

Figure 5B, 5C, and 5D are partially enlarged views of other three embodiments of the apparatus in accordance with the present invention.

DESCRIPTION OF THE PREFERRED EMBODIMENTS

The preferred embodiments of the present invention will hereinbelow be described with reference to the accompanying drawings.

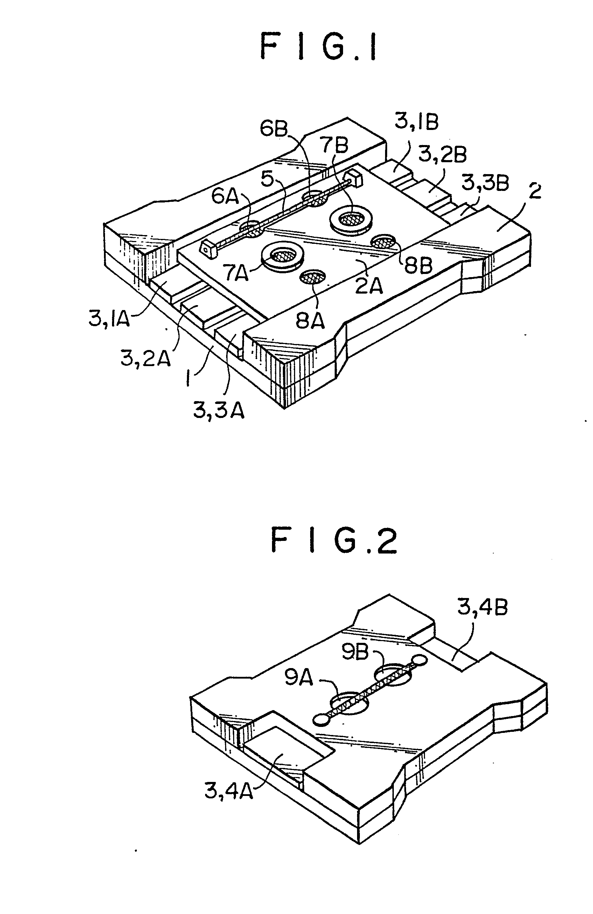

Figure 1 is a perspective view of an example of a slide-type ionic activity measuring device or article (i.e. a slide) to which the apparatus in accordance with the present invention is applicable. The slide here comprises a lower slide frame 1, an upper slide frame 2, and three pairs of ion-selective electrodes 3.1A,3.1B; 3.2A,3.2B; and 3.3A,3.3B, each of said pairs having an ion-selective outermost layer (not shown) and being disposed between said lower and upper slide frames 1 and 2. Three pairs of through holes 6A,6B; 7A,7B; and 8A,8B are formed in the center portion 2A of the upper slide frame 2. These through holes are functionally divided into a pair of apertures for liquid-spotting 7A and 7B, and two pairs of vent apertures 6A,6B; and 8A,8B. A porous bridge (spun yarn or thread bridge) 5 which can promote capillary action is disposed on the vent apertures 6A and 6B. The ends of the bridge 5 are fixed on the upper slide frame 2. Although not shown in the drawing, first and second porous members for liquid distribution (made of such material as

- 8 -

cotton bandage, cotton gauze, or filter paper) are disposed between the ion-selective layers of the first set of ion-selective electrodes 3.1A, 3.2A, and 3.3A and the first set of through holes 6A, 7A and 8A; and between the ion-selective layers of the second set of ion-selective electrodes 3.1B, 3.2B, and 3.3B and the second set of through holes 6B, 7B and 8B.

Each pair of said ion-selective electrodes may have a different ion-selectivity, for example, the electrodes 3.1A and 3.1B for $Na^+$; 3.2A and 3.2B for $K^+$; and 3.3A and 3.3B for $Cl^-$. In this case, for example, one or more droplets of a reference solution containing $Na^+$, $K^+$, and $Cl^-$ of a known ionic activity is spotted on the aperture for liquid-spotting 7A and one or more droplets of a sample solution (e.g. whole blood or blood serum) is spotted on the aperture for liquid-spotting 7B so as to determine the ionic activity of said ions. Said reference and sample solutions diffuse through the porous members for liquid distribution so as to hemispherically rise from the vent apertures 6A and 6B, respectively, and then penetrate the porous bridge 5 so that their interfaces meet within said bridge, thus forming an electrical conduction therebetween. At that point, a pair of probes are brought into contact with each pair of terminal portions of said pairs of electrodes, so that the potential difference between each pair of said electrodes is measured (i.e. between 3.1A and 3.1B, 3.2A and 3.2B, and 3.3A and 3.3B). The term "potential difference" as used herein refers to difference in electro-motive force between a pair of ion-selective electrodes. The ionic activity of each of the ions is determined from thus measured potential difference with reference to its corresponding calibration curve.

The foregoing type of slide which can simultaneously measure the ionic activity of different ions is fully described in U.S. Patent No. 4,437,970.

Figure 2 shows an example of an ionic activity measuring device in which the ionic activity of only one ion is measurable. This slide has a pair of apertures for liquid-spotting 9A and 9B, and a pair of ion-selective electrodes 3.4A and 3.4B corresponding thereto.

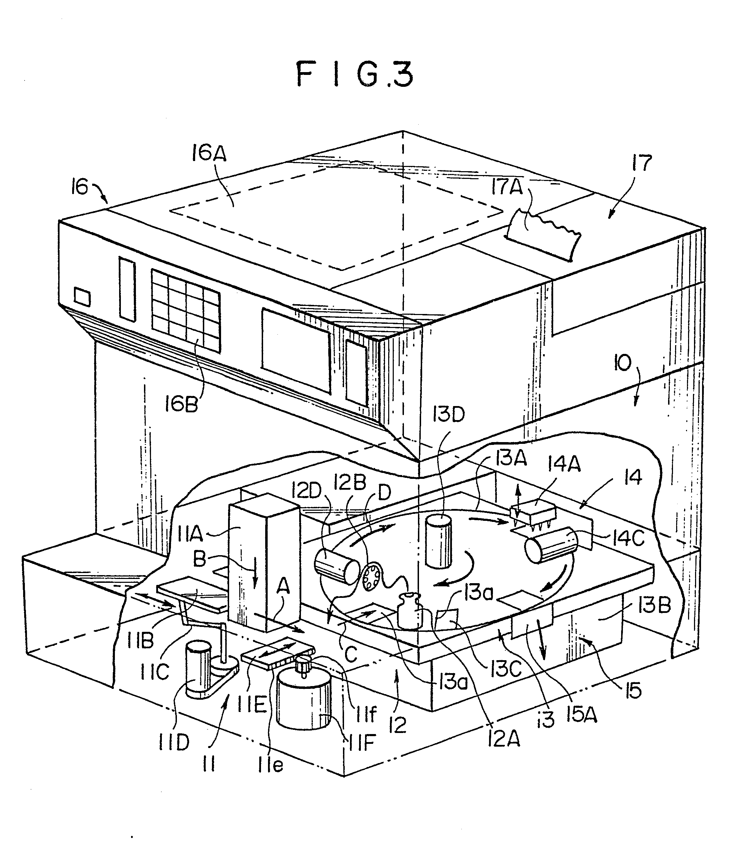

Figure 3 shows an embodiment of the apparatus for measuring ionic activity in accordance with the present invention. The present invention will hereinbelow be described in detail with reference to this embodiment.

The apparatus represented by this drawing is contained in a housing 10 and consists of a slide supplying section 11, a spotting section 12, a thermostatic means 13, a measuring section 14, a discharging section 15, an operation and display section 16, and a printer 17.

The slide supplying section 11 comprises a slide holder 11A which contains a stack of slides, a slide pushing member 11B which pushes out one slide at a time from the lower end of said holder 11A, and a crank member 11C driven by a motor 11D which reciprocates said pushing member 11B. When the lowest slide is pushed out by the pushing member 11B in the direction indicated by arrow A, the stack of slides within the slide holder 11A descends in the direction of arrow B. The pushing member 11B enters the slide holder 11A through an opening formed on a side face of the lower end thereof so as to push out a slide, and then exits from the holder 11A, allowing the next slide to descend to the lowermost position in the holder 11A.

The slide pushed out of the holder 11A is thrust in the direction indicated by arrow C by charging means 11E which has a rack 11e which engages with a pinion 11f fixed on the shaft of a motor 11F and which is reciprocated by the rotation of said motor 11F. The slide thrust by the charging means 11E is pushed into one of the slide receiving portions 13a formed on the periphery of a disc-like turret 13A.

At a certain stage before, during (i.e. at a position where an intermittently supplied slide stops), and after the insertion of the slide, one or more droplet of the reference solution from a reservoir 12A is spotted on the slide by means of a peristaltic pump 12B.

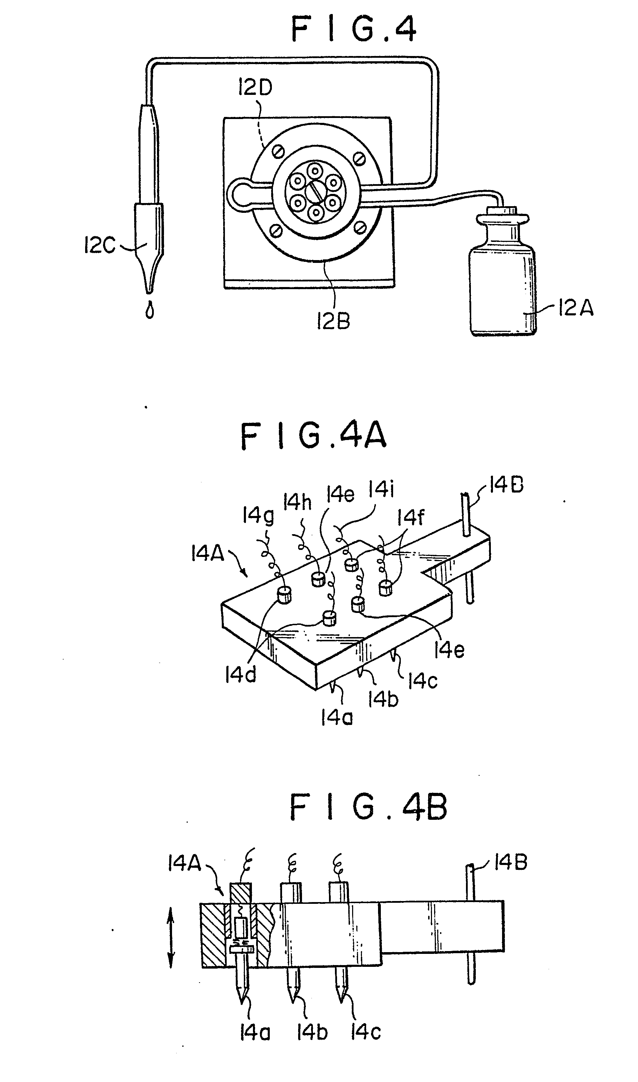

An example of a device to be used for the spotting of the reference solution is shown in detail in Figure 4. The intake of the peristaltic pump 12B is connected to the reservoir 12A of the reference solution and the outlet to a nozzle 12C, so that said reference solution is fed, droplet by droplet, from the nozzle 12C, by means of a motor 12D, onto one of the pair of apertures for liquid-spotting of the slide located below the nozzle 12C. Such a peristaltic pump is preferably used for the apparatus in accordance with the present invention since the reference solution is fed only in one direction so that it can be supplied at a constant volume and concentration.

By using one of the spotting means described, a constant volume of the reference solution is deposited on one aperture for liquid-spotting (e.g. 7A of Figure 1 or 9A of Figure 2) of each slide.

Preferably at nearly the same time, one or more droplet of a sample solution is manually or automatically spotted on the other aperture for liquid-spotting (e.g. 7B of Figure 1 or 9B of Figure 2) of the same slide, using any of the known techniques.

The slide which has been thus spotted is conveyed in the direction of arrow D by the rotation of said turret 13A.

The turret 13A is rotatably disposed upon a thermostatic plate 13C which is fixed to a heater (or a thermocooler) 13B, and is intermittently rotated in the direction of arrow D by means of a motor 13D. The angle of this intermittent rotation is equal to the angular distance between one slide receiving portion 13a and the next, said slide receiving portions being disposed equidistantly. A guiding wall having a height not less than the thickness of the turret 13A is formed around the rim of said turret 13A so as to prevent the slides from falling out from the slide receiving portions 13a due to the rotation of said turret 13A.

In order to prevent the reference and sample solutions spotted on the slides from evaporating water as well as to sufficiently maintain the thermostatic effect obtained by the thermostatic plate 13C, a cover (not shown) which shields the upper faces of the slides from the ambient atmosphere is disposed upon the turret 13A. Naturally, this cover has an opening at the measuring section, which will be described hereinbelow, and at the spotting section in case the slide is inserted into the slide receiving portion 13a in the turret 13A prior to the spotting, so that necessary operations can be conducted with the cover in place.

Within the rotation area of the turret 13A, a vertically movable probe assembly 14A for measuring potential difference is disposed. As shown in Figures 6A and 6B, the aforesaid measuring section 14 comprises the probe assembly 14A having, if the slide shown in Figure 1 is used, six needle-like terminals 14a, 14b, 14c, ... which are resiliently projected, and lead wires 14g, 14h, and 14i for outputting the potential difference from contacts 14d, 14e, and 14f of said terminals to a measuring circuit (not shown); and a guide 14B to which said probe assembly 14A is connected so as to be vertically movable. This probe assembly 14 is vertically moved by means of a known mechanism (not shown) which is driven by a motor 14C.

Though in accordance with the foregoing embodiment the slide is conveyed with its apertures for liquid-spotting facing up, the slide can also be conveyed with said apertures facing down. In the latter case, the probe assembly may be moved upwardly from below with its probes projecting up so as to come into contact with the terminals of said slide.

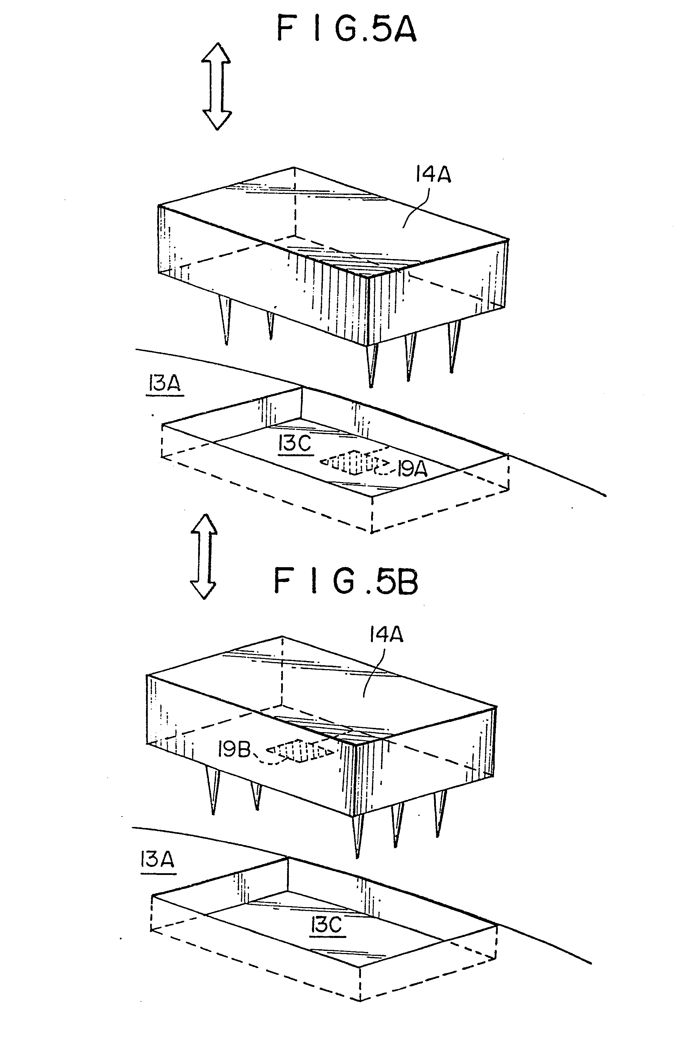

As shown in Figure 5A, a temperature measuring means 19A is disposed in a thermostatic plate 13C directly under the probe assembly 14A, so as to measure temperature of the slide when the probe assembly 14A comes into contact with said slide located at this position and then to output said temperature, through an outputting means (not shown), to a calculating means 16A of Figure 3. As the temperature measuring means 19A, a semiconductor sensor, a thermister, a thermocouple, or the like can be used. To minimize its heat capacity so as not to affect the measuring temperature, it is preferable to keep the size of said means as small as possible.

The turret 13A conveys the slide, by way of the measuring section 14, to the discharging section 15 which consists of a discharging chute 15A formed in the thermostatic plate 13C. Since the slide receiving portion 13a of the turret 13A consists of a cutout, the slide received in the cutout is slidably shifted on the thermostatic plate 13C together with the rotation of said turret 13A so as to be cast off at and discharged through the discharging chute 15A which is slantingly formed beneath the thermostatic plate 13C.

The operation and display section 16 incorporating the calculating means 16A which corrects said potential difference with reference to said temperature so as to calculate the ionic activity in the sample solution. The calculated value is outputted to a display section 16B or a printer 17A.

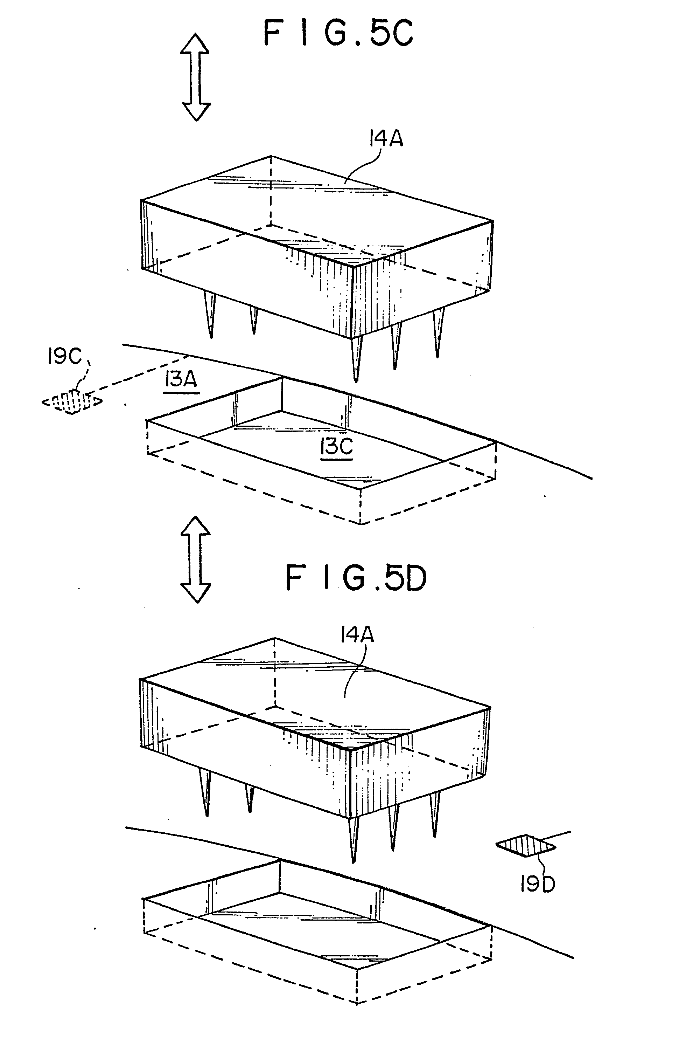

Figures 5B, 5C, and 5D are partially enlarged views showing temperature measuring means 19B, 19C, and 19D, respectively, in accordance with different embodiments of the present invention.

In the embodiment shown in Figure 5B, the temperature measuring means 19B is disposed adjacent to the probe assembly 14A.

In the embodiment shown in Figure 5C, the temperature measuring means 19C is disposed within a portion of the thermostatic plate 13C, directly in front of the point where the probe assembly 14A descends.

In the embodiment shown in Figure 5D, the temperature measuing means 19D is disposed within a space in the vicinity of the probe assembly 14A.

Similar to the embodiment shown in Figure 5A, in the foregoing embodiments, it is preferable to output a temperature measured at or near to the time the probe came into contact with the slide.

The foregoing embodiments can be changed in various ways without deviating from the scope of the present invention.

For example, if reference and sample solutions are to be spotted on the slide outside the apparatus, the slide supplying means 11 can be omitted. Also, as previously described, the thermostatic section 13 is unnecessary when thermostatic control is not used.

Though in accordance with the foregoing embodiment the slide is conveyed with its apertures for liquid-spotting facing up, the slide can also be conveyed with said apertures facing down. In the latter case, the probe assembly may be moved upwardly from below with its probes projecting up so as to come into contact with the terminals of said slide.

0154146

C L A I M S

1. In a method for measuring ionic activity comprising the steps of:

spotting a reference solution containing a known ionic activity of a specific ion on one ion-selective layer of a pair of ion-selective electrodes of an ionic activity measuring device having at least one pair of ion-selective electrodes each of which generates a potential difference corresponding to the ionic activity of a specific ion, and a porous bridge disposed between the ion-selective layers of at least one pair of said ion-selective electrodes;

spotting a sample solution on the other layer of said pair of ion-selective layers;

measuring the potential difference between said pair of ion-selective electrodes by bringing the pair of probes into contact therewith; and

calculating ionic activity of said ion in said sample solution from thus measured potential difference in accordance with a calibration curve;

wherein the improvement comprising the steps of:

measuring the temperature in the vicinity of said ionic activity measuring device; and

with reference to the measured temperature, correcting said potential difference or modifying said calibration curve so as to calculate said ionic activity.

2. A method for measuring ionic activity as defined in Claim 1 wherein said step of measuring temperature in the vicinity of said ionic activity measuring device is conducted at the time when said pair of probes comes into contact with said ionic activity measuring device.

3. An apparatus for measuring ionic activity comprising:

at least one pair of probes which come into contact with at least one pair of ion-selective electrodes of an ionic activity measuring device, on each of which a reference solution containing a known ionic activity of a specific ion and a sample solution are spotted, so as to measure the potential difference therebetween, said ionic activity measuring device having said pair of ion-selective electrodes and a porous bridge disposed between the ion-selective layers of said at least one pair of ion-selective electrodes; a temperature measuring means for measuring the temperature in the vicinity of said ionic activity measuring device; and a calculating means for correcting the potential difference outputted from said probes or modifying a calibration curve, with reference to the measured temperature, so as to calculate said ionic activity of said ion in said sample solution.

4. An apparatus for measuring ionic activity as defined in Claim 3 wherein said temperature measuring means is disposed in the vicinity of said probe assembly so as to measure said temperature substantially at the time when said pair of probes come into contact with said ionic activity measuring device.

5. A device for measuring ionic activity as defined in Claim 3 wherein said temperature measuring means is disposed in the vicinity of said ionic activity measuring device so as to measure said temperature substantially at the time when said pair of probes comes into contact with said ionic activity measuring device.

# F I G. I

# F I G. 2

# F I G.3

# FIG.4

# FIG.4A

# FIG.4B

# F I G.5A

14A

13A

13C

19A

# F I G.5B

14A

19B

13A

13C

# F I G.5C

14A

19C

13A

13C

# F I G.5D

14A

19D

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 257 862 (SCHNIPELSKY et al.) <br> * Column 7, lines 7-14; column 8, lines 59-68 * | 1-3,5 | G 01 N 27/28 |
| Y | US-A-4 073 053 (SZONNTAGH) <br> * Column 3, line 26 - column 4, line 13 * | 1-3,5 | |
| A | FR-A-2 468 945 (UNITED STATES SURGICAL CORP.) <br> * Page 3, line 1 - page 4, line 3 * | 1,3,4 | |
| A | US-A-4 329 650 (TEASS et al.) <br> * Column 1, line 56 - column 2, line 43 * | 1,3 | |
| | | | TECHNICAL FIELDS SEARCHED (Int. Cl.4) |
| | | | G 01 N 27/00 <br> G 01 N 35/00 <br> G 01 N 33/00 |

The present search report has been drawn up for all claims

| Place of search | Date of completion of the search | Examiner |
|---|---|---|
| THE HAGUE | 10-05-1985 | BINDON C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82